# EUROPEAN PATENT APPLICATION

(11) **EP 1 777 672 A1**
(43) Date of publication of application: **25.04.2007**
(21) Application number: 05022696.8
(22) Date of filing: 18.10.2005
(51) Int. Cl.: G08C 17/02, G01R 19/00, H02J 7/34

(54) **Electrical energy storage unit on EDLC basis**

(71) Applicant: MATSUSHITA ELECTRIC INDUSTRIAL CO., LTD., Kadoma City Osaka 571-8501 (JP)
(72) Inventor: Ahang, Baghschomali, 21337 Lüneburg (DE)
(74) Representative: UEXKÜLL & STOLBERG

(57) **Abstract**

The invention relates to an electrical energy storage unit on EDLC basis comprising a first number of electrochemical double-layer capacitors (4). According to the invention the energy storage unit is characterised in that a second number of sensor units (2) is provided, wherein each sensor unit (2) is associated with a particular one of said capacitors (4) of the electrical energy storage unit, is adapted to sense current and voltage values over the associated capacitor (4) and its temperature, and comprises a wireless transmitter for the data representative of said voltage, current and temperature values, and in that means for storing (6, 10) the data of each sensor unit as time series are provided, wherein said means for storing is associated with a wireless transceiver (8) for receiving said data representative of said voltage, current and temperature values from each sensor unit and for wireless transmission of the time series data stored in means for storing upon receiving a transmission request signal from a remote controlling unit.

## Description

The present invention relates to an electrical energy storage unit on EDLC basis, comprising a plurality of electrochemical double layer capacitors.

The electrochemical double layer capacitor (EDLC) is an emerging technology which plays an important role in various applications, as for example electrical pulse energy sources and electrical power backup sources. In such applications a long cycle lifetime and fast charge/discharge capability are an advantage. There exist many applications that require fast, high current pulses from a rechargeable energy storage device. EDLCs improve on energy capabilities of batteries, but cannot store as much energy. By utilising EDLCs in combination with a battery source, they are therefore ideally suited to meeting peak power requirements while the battery supplies the average load. This configuration also improves the performance of the battery reducing voltage transients and extending the battery runtime by reducing the impact of pulsed currents.

Double-layer capacitors are an important alternative in the current set of energies storage devices, bridging the gap between batteries and conventional capacitors. They offer greater energy densities than electrostatic capacitors, making them a better choice for backup applications. They also possess higher energy densities than batteries, allowing them to perform a role in load levelling of pulsed currents. They can help to improve battery performance combined as a hybrid energy source, or can provide an efficient and long lasting means of energy storage when used on their own. One important application is in connection with so-called hybrid vehicles which use a conventional internal combustion engine in combination with an electric motor where EDLCs can be utilised to satisfy peak energy demands.

Double layer capacitors consist of high surface area electrodes in contact with an electrolyte and separated by an ion permeable separator. A variety of electrode and electrolyte materials are possible. The cell voltage of an EDLC is limited by the breakdown voltage of the electrolyte. Currently available EDLCs provide voltages above 2 volt, for example up to 2,5 volt.

Most applications require voltages much higher than that which can be provided by an individual capacitor. It is thus necessary to combine a number of capacitor cells in series to achieve the required voltage level. This increases the total equivalent series resistance (ESR) of the combined capacitors. If the ESR needs to be reduced, additional strings or series of capacitors can be connected in parallel. The number of parallel connections is largely determined by ESR energy storage and temporal requirements.

Variations in individual cell capacitance and resistance result in an unequal voltage distribution across the bank (array of capacitors). This can be dangerous because a local voltage greater than the electrolyte's breakdown voltage will result in the destruction of the cell. This also implies that the electrical and thermal behaviour is unique to each EDLC cell array design and assembly.

Like other energy storage devices, EDLC-based energy storage devices have to go through standard tests. During device development, these tests are required to prove whether customer requirements are fulfilled. For the mass production, testing and monitoring is needed to check the devices against its functional specification. The nature of tests required for EDLC energy storage devices can be widely spread in time domain. The tests can be categorised as follows: Capacitance (cycling), pulse test, floating and self-discharge tests.

At present, such tests are performed in the laboratory by placing probes at selected capacitors and measuring quantities such as voltage across the cell, current and temperature by individual sensors included in each probe. However, such tests cannot be performed under realistic operating conditions, because such measuring equipment cannot be connected to the EDLC device if the latter is installed, for example, in a vehicle. On the other hand, it is almost impossible to simulate the real environment of the EDLC storage devices by means of laboratory tests, especially for a long period of time.

It is therefore an object of the present invention to provide an EDLC-based electrical energy storage device which allows testing and monitoring in the actual application environment.

According to the present invention an electrical energy storage unit on EDLC basis comprising a first number of electrochemical double-layer capacitors, is characterised in that a second number of sensor units is provided, wherein each sensor unit is associated with a particular one of said capacitors, is adapted to sense current and voltage values over the associated capacitor and its temperature, and is provided with a wireless transmitter for data representative of said voltage, current and temperature values, and in that means for storing the data of each sensor unit as time series are provided, wherein said means for storing is associated with a wireless transceiver for receiving said data representative of said voltage, current and temperature values from each sensor unit and for wireless transmission of the time series data stored in said means for storing upon receiving a transmission request signal from a remote controlling unit.

Thus, individual sensor units are permanently associated with a number of capacitors (in addition there may also be sensor units associated with other circuit elements in the EDLC energy storage device). It is not necessary that each capacitor cell in the energy storage device is provided with such a sensor unit, but it may be sufficient if only a sample of capacitors is selected for monitoring. Each sensor unit, preferably being an integrated circuit design integrated on a chip, is connected to the terminals or electrodes of the associated capacitor, and is capable of sensing the voltage across the capacitor, the current flowing and the temperature of the capacitor. Furthermore, there are means for storing the data of each sensor unit as time series, i.e. as a function of time. Said means for storing is associated with a wireless transceiver for receiving said data representative of said voltage, current and temperature from each sensor unit and for storing them as time series and for wireless transmission of time series data stored in the means for storing upon activation by a remote controlling unit, i.e. upon wireless reception of transmission request signal from the remote controlling unit.

The term time series of data as used herein, for example for a quantity V, does not require presence of a vector or series V(t₁), V(t₂), V(t₃), ... V(tₙ) in this particular form, but only implies that each value V(tᵢ) can be associated with a time tᵢ.

Each of the sensor units may be configured to acquire data representative of said voltage, current and temperature values in predetermined time intervals, or may be configured to do so upon receipt of a data acquisition request signal.

The individual sensor units may send their data in a time multiplexed manner, i.e. each sensor has a different delay time after which the actual transmission starts, and/or in a code multiplexed manner, i.e. including a code being sent that identifies the sending sensor unit.

In a preferred embodiment one of the sensor units is configured as a sensor master unit by including a pre-programmed controller which is connected to a memory and to the wireless transceiver of the sensor master unit. Said memory forms said data storage means for storing the time series of sensed values for all sensor units included in the device. Said controller is adapted to receive said data representative of said voltage, current and temperature values sent by each of the other sensor units through its transceiver and to store said data together with its own data in form of time series data. The controller is further adapted to effect transmission of the time series data by the transceiver means upon receiving a corresponding activation signal from a remote controlling unit.

Alternatively, the sensor master unit may be replaced and its tasks be performed by a central processing unit provided in energy storage device which communicates by wireless transmission with each of the plurality of sensor units to collect their voltage, current and temperature values and which stores them in time series form in a memory of the central processing unit which memory forms said means for storing. The central processing unit is provided with a transceiver for communication with the individual sensor unit and a remote controlling unit.

Alternatively, each sensor unit may be provided with a memory and a controller for storing the time series of sensed data autonomously, and for individual communication with the remote controlling unit.

In a preferred embodiment each of the sensor units is formed of an integrated circuit chip which is connected to the two terminals of the associated capacitor and to an antenna, and which includes the individual sensors. Furthermore, it is preferred that each of the sensor units is adapted to switch to a stand-by mode after sending said data representative of said voltage, current and temperature values, wherein the stand-by mode is maintained for a predetermined time interval or until a data transmission demand signal is received by the sensor unit.

The invention will in the following be explained in connection with the drawings, in which
Figure 1 shows a schematic block diagram of a EDLC electrical energy storage unit;
Figure 2 shows a schematic view of a sensor unit; and
Figure 3 shows a schematic diagram of an EDL energy storage bank.

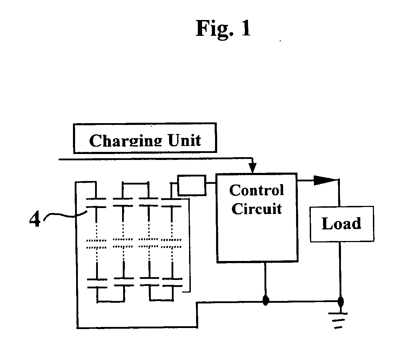

The EDLC energy storage device comprises a plurality of EDLC capacitors 4 which are, as shown in Figure 1, connected via a control circuit to a load.

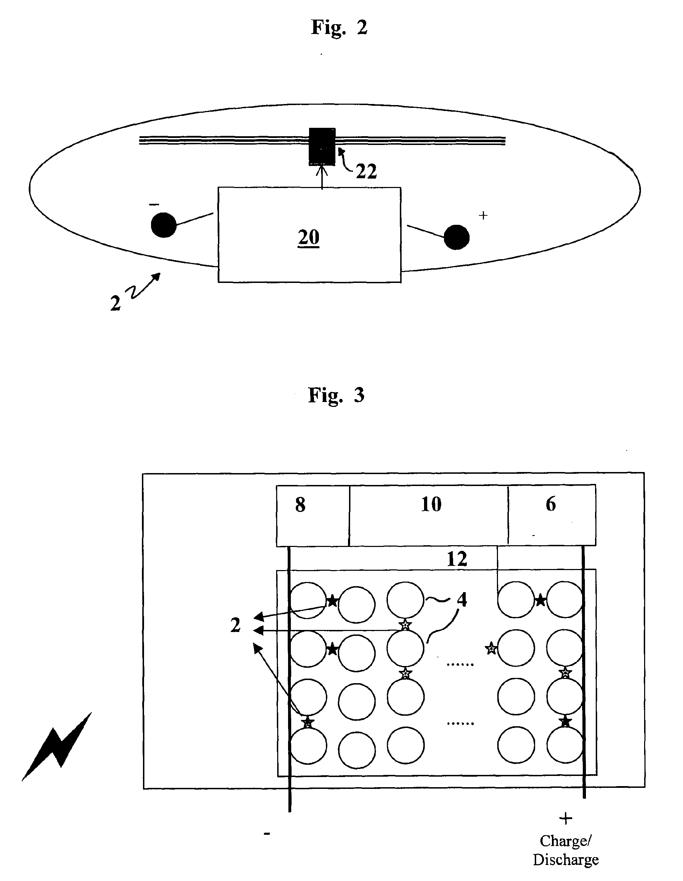

In Figure 2 a sensor unit is schematically depicted which has two connection ports + and - which are to be connected with the terminal of an individual capacitor cell. The sensor unit further comprises an ultra-low energy controller 20 and the sensor elements for sensing voltage, current and temperature. Preferably, these sensors and controller circuits are formed as integrated circuits on a chip. This chip is further provided with a transceiver 22 which includes the antenna as indicated.

A plurality of sensor units 4 is distributed over the array of EDLC capacitors. It is not necessary to associate a sensor unit with each capacitor, but may be sufficient to provide such sensor units at certain positions, as indicated in Figure 3. The sensed values of current Iᵢ(tⱼ), voltage Vᵢ(tⱼ) and Tᵢ(tⱼ) of sensor unit i at time tⱼ are either stored as a sequence in each individual sensor unit, or are transmitted to a sensor master unit 12 which, under control of a controller 10, stores these time series data in a common memory 6 for all slave sensor units 2. The times tⱼ may be regular time intervals, or can be determined by a predetermined relationship which is stored by the controller 10 of the sensor master unit 12 which then according to the predetermined relationship sends, through its transceiver 8, data acquisition request signals to the slave sensor units 2 to cause transmission of their sensed data representative of voltage, current and temperature at the particular time, which are in turn received by the transceiver 8.

The transmission of the data from the sensor units may for example be carried out in a time-multiplexed manner, i.e. each sensor has a characteristic delay after which the actual transmission starts so that the sensor data are received subsequently and the delay time identifies the individual sending sensors. Alternatively, each sensor unit may also send a characteristic code in order to associate each sent set of values with a particular sensor.

In addition to the above options, it is also possible to trigger a data acquisition in case one sensor unit senses a voltage, current or temperature value above a respective threshold value.

In this manner, the history of the EDLC can be retrieved by a remote controlling unit which causes the sensor master unit 12 to transmit all time series data, or which causes all individual sensor units 2 to transmit their data. This time series data can then be rearranged or analysed and displayed in various manners, for example as histograms for each quantity voltage Vᵢ, current Iᵢ, and temperature Tᵢ as a function of time for each individual sensor unit i, or as spatial representation at particular times tᵢ indicating the temperature, current and voltage distribution over the capacitor array.

Advantageously, the electrical energy storage devices can be equipped with a Built In Self Test function by including a test control unit having self test programs stored therein which when executed in the test control unit operate the electrical energy storage device to perform particular operational transitions or cycles, for example charging/de-charging sequences etc.. The test control unit may be a separate component or be part of the controller of the sensor master unit 12. The self test programs can be executed automatically at predetermined intervals, or be started by an external command.

## Claims

1. Electrical energy storage unit on EDLC basis comprising a first number of electrochemical double-layer capacitors (4), **characterised in that** a second number of sensor units (2) is provided, wherein each sensor unit (2) is associated with a particular one of said capacitors (4) of the electrical energy storage unit, is adapted to sense current and voltage values over the associated capacitor (4) and its temperature, and is provided with a wireless transmitter (22) for the data representative of said voltage, current and temperature values, and **in that** means for storing the data of each sensor unit as time series are provided, wherein said means for storing is associated with wireless transceiver for receiving said data representative of said voltage, current and temperature values from each sensor unit and for wireless transmission of the time series data stored in means for storing upon receiving a transmission request signal from a remote controlling unit.

2. Electrical energy storage unit according to claim 1, **characterised in that** each sensor unit (2) is configured to acquire data representative of said voltage, current and temperature values in predetermined time intervals.

3. Electrical energy storage unit according to claim 1, **characterised in that** each sensor units (2) is configured to acquire data representative of said voltage, current and temperature values upon receipt of a data acquisition request signal.

4. Electrical energy storage unit according any preceding claim, **characterised in that** one of the sensor units is configured as a sensor master unit (12) by including a pre-programmed controller (10) which is associated with a non-volatile memory (6) and with the wireless transceiver (8) of the sensor master unit (12), said memory (6) forming said data storage means, wherein said controller (10) is adapted to receive said data representative of said voltage, current and temperature values sent by each of the other sensor units (2) by its transceiver (8) and to store said data together with its own data in form of time series data in the memory (6), and to effect transmission of the time series data by the transceiver (8) upon receiving a corresponding activation signal from a remote controlling unit.

5. Electrical energy storage unit according to any of claim 1 to 3, **characterised in that** each of the sensor units (2) is configured to include a controller (20) connected to a non-volatile memory and its wireless transceiver (22), wherein said controller (20) is adapted to store said data representative of said voltage, current and temperature in form of time series data in the memory, and to effect transmission of the time series data by its transceiver upon receiving a corresponding activation signal from a remote controller.

6. Electrical energy storage unit according to claim 4, **characterised in that** each of the sensor units (2) except the sensor master unit (12) is configured to acquire and to transmit said data representative of said voltage, current and temperature values to the sensor master unit (12) at regular time intervals.

7. Electrical energy storage unit according to claim 4, **characterised in that** each of the sensor units (2) except the sensor master unit is configured to acquire and transmit said data representative of said voltage, current and temperature values to the sensor master unit upon receiving a corresponding data acquisition request signal from the sensor master unit (12).

8. Electrical energy storage unit according to any preceding claim, **characterised in that** each of the sensor units is formed of an integrated circuit chip which is connected to the two terminals of the associated capacitor and to an antenna.

9. Electrical energy storage unit according to any preceding claim, **characterised in that** each of the sensor units is adapted to switch to a stand-by mode after sending said data representative of said voltage, current and temperature, wherein the stand-by mode is maintained for a predetermined time interval or until a data acquisition request signal is received by the sensor unit.

10. Electrical energy storage unit according to any preceding claim, **characterised in that** a test control unit is provided which contains self test programs stored therein, which self test programs when executed in the test control unit control the operation of the electrical energy storage unit to go through predetermined operational transitions or cycles.
